# EUROPÄISCHE PATENTSCHRIFT

(11) **EP 0 681 256 B1**
(45) Veröffentlichungstag und Bekanntmachung des Hinweises auf die Patenterteilung: **28.07.1999**
(21) Anmeldenummer: 94107164.9
(22) Anmeldetag: 06.05.1994
(51) Int. Cl.: G06K 7/10

(54) **Optische Leseeinrichtung**
Optical reader
Lecteur optique

(43) Veröffentlichungstag der Anmeldung: 08.11.1995
(73) Patentinhaber: Schablonentechnik Kufstein Aktiengesellschaft, 6330 Kufstein (AT)
(72) Erfinder: Juffinger, Josef, A-6335 Thiersee (AT)
(74) Vertreter: TER MEER STEINMEISTER & PARTNER GbR

(56) Entgegenhaltungen:
- EP-A- 0 163 114
- EP-A- 0 560 105
- DE-A- 4 142 701

## Beschreibung

Die Erfindung betrifft eine optische Leseeinrichtung gemäß dem Oberbegriff des Patentanspruchs 1.

Eine derartige Leseeinrichtung ist bereits aus der EP 0 560 105 A3 bekannt. Diese bekannte optische Leseeinrichtung enthält eine eine optische Achse aufweisende Abbildungsoptik, die von einer in einem Lesekopf vorhandenen Lichtquelle ausgesandtes Licht bündelt, und ferner eine konzentrisch zur optischen Achse angeordnete Lichtempfangsoptik zum Empfang des von der Abbildungsoptik gebündelten und von einem Gegenstand zurückgeworfenen Lichts.

Die optische Leseeinrichtung wird hauptsächlich zum Lesen von Farbinformation bei Scannern, insbesondere bei Trommelscannern eingesetzt. Bei dieser Einrichtung wird durch intensive punktförmige Beleuchtung einer Vorlage und Auswertung der Farbwerte des reflektierten Lichts sowie Vorbeibewegen dieser Vorlage an der Stelle der Bestrahlung bzw. Auswertung der gesamte Informationsgehalt der Vorlage erfaßt.

Schwierigkeiten stellen sich meist dann ein, wenn Information aus Vorlagen ausgelesen werden soll, die neben der eigentlichen Information, etwa einem Farbmuster, auch eine Oberflächenstruktur aufweisen. Solche Oberflächenstrukturen sind z.B. bei Geweben oder Gewirken vorhanden, die als auszuwertenden Informationsinhalt ein Farbmuster tragen. Die Struktur der Warenoberfläche stört, weil die durch die Struktur bedingten engen Spalten wegen der dort zu geringen Beleuchtungsstärke meist schwarz oder dunkelgrau erscheinen und sich diese Helligkeitsunterschiede dem Farbmuster überlagern. Man versucht hier den Punktdurchmesser. innerhalb dessen das Muster hell bestrahlt wird, größer zu wählen als die typische Strukturabmessung beträgt, um dadurch den Einfluß der Oberflächenstruktur wenigstens zu vergleichmäßigen. Das Farbmuster erscheint dann insgesamt zwar etwas dunkler, aber die sonst typischen Störungen, die aus der Farbfolge: helle Buntfarbe - schwarze Farbe - helle Buntfarbe bestehen, lassen sich dadurch vermeiden. Als Strukturabmessung wird man im Falle eines Gewebes den Abstand der Schuß- oder der Kettfäden und im Falle eines Gewirkes die Maschengröße verstehen. Ähnliche Probleme liegen auch bei Mustervorlagen vor, die aus bemaltem oder bedrucktem und aufjeden Fall mit einer Prägung versehenem Papier bestehen.

Die Beleuchtung der Mustervorlage erfolgt durch Abbilden einer intensiv bestrahlten Blendenöffnung oder einer Lichtleiteraustrittsöffnung über ein Linsensystem auf die Mustervorlage. Unterschiedliche Durchmesser dieser Punkte hat man bisher dadurch erreicht, daß man den Lichtkegel, welcher durch das Linsensystem erzeugt wurde, mehr oder weniger weit von der Mustervorlage abrückte. Der kleinste Beleuchtungspunktdurchmesser ergibt sich dann. wenn die Vorlage in der optischen Bildebene zu liegen kommt.

Leider wird bei diesen Leseoptiken mit der Variation des Abstandes der Belichtungsoptik von der Vorlage auch der Abstand jener Optikteile von der Vorlage verändert, deren Aufgabe es ist, das reflektierte Licht aufzufangen und zu einer Auswerteeinheit zu führen. Da der von diesen Teilen aufgenommene Lichtstrom umgekehrt proportional zum Quadrat des Abstandes ist, ergeben sich beträchtliche Änderungen dieses Lichtstromes. Insbesondere bei größeren Abtastdurchmessern sinkt hierdurch die Helligkeit und damit auch die mögliche Lesefrequenz.

Der Erfindung liegt die Aufgabe zugrunde, die optische Leseeinrichtung der eingangs genannten Art so weiterzubilden, daß bei einer Anpassung der Beleuchtungspunktgröße an die Struktur der Vorlage keine Abstandsänderung mehr zwischen der Vorlage und der Lichtempfangsoptik erforderlich ist.

DE-A-4 142 701 offenbart eine optische Leseinrichtung mit einer eine optische Achse aufweisenden Abbildungsoptik, die von einer Lichtquelle ausgesandtes Licht bündelt, wobei die Abbildungsoptik entlang der optischen Achse relativ zur Lichtquelle verschiebbar ist. Eine Lichtempfangsoptik zum Empfang des von der Abbildungsoptik gebündelten und von einem Gegenstand zurückgeworfenen Lichts ist hier unabhängig von der Abbildungsoptik im Strahlengang angeordnet.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Eine optische Leseeinrichtung der Erfindung zeichnet sich dadurch aus, daß die Lichtquelle entlang der optischen Achse relativ zur Abbildungsoptik verschiebbar ist.

Erfindungsgemäß bleiben somit sowohl der Abstand zwischen der Beleuchtungsoptik und der Vorlage als auch der Abstand zwischen der Lichtempfangsoptik bzw. Leseoptik und der Vorlage konstant, während nur der Abstand des abzubildenden Gegenstandes von der Beleuchtungs- bzw. Projektionsoptik verändert wird. Lichtverluste infolge einer Relativverschiebung zwischen Vorlage und Lichtempfangsoptik können somit nicht mehr auftreten.

Die Abbildungsoptik enthält vorzugsweise Achromate, da der optische Lesekopf in der Lage sein muß, das im zugeführte Abtastlicht sauber zu fokussieren. Zum Beispiel können zwei Achromate zum Aufbau der Abbildungsoptik verwendet werden, um die genannte Aufgabe zu erfüllen. Durch die Achromate wird ferner erreicht, daß sich schon bei kleinen Verschiebewegen der Lichtquelle große Änderungen des Durchmessers des Abtastlichtfleckes ergeben, so daß die Baulänge des optischen Lesekopfes klein gehalten werden kann.

Nach einer vorteilhaften Ausgestaltung der Erfindung ist die Lichtquelle in einem Verschiebeelement angeordnet, welches passend in einem Verschiebekanal verschiebbar ist. Der Verschiebekanal kann beispielsweise in einem die Abbildungsoptik aufnehmenden Gehäuseteil angeordnet sein. so daß eine einfache und sichere Lichtquelle entlang der optischen Achse gewährleistet ist. Vorzugsweise sind das Verschiebeelement und der Verschiebekanal zylindrisch ausgebildet, was deren Herstellung wesentlich erleichtert.

Nach einer vorteilhaften Weiterbildung der Erfindung dient als Lichtquelle die Stirnfläche eines Lichtleiters, der über eine Fassung im Verschiebeelement gehalten ist. Das Beleuchtungslicht läßt sich dadurch in einfacher Weise der Abbildungsoptik zuführen. Der hierzu erforderliche bauliche Aufwand ist gering.

Dabei kann die Fassung einen Umfangsflansch aufweisen und mittels einer diesen hintergreifenden Überwurfmutter fixiert sein, die auf das Verschiebeelement aufgeschraubt ist. Montage und Auswechslung der Lichtquelle lassen sich daher relativ leicht durchführen.

Das Verschiebeelement ist nach einer weiteren Ausgestaltung der Erfindung mit einem Stelltrieb gekoppelt, der ein elektromotorischer oder handbetätigbarer Stelltrieb sein kann. Beispielsweise kann der elektromotorische Stelltrieb durch einen Schrittmotor realisiert werden, während für den handbetätigbaren Stelltrieb ein Stellrad, oder dergleichen, vorgesehen ist.

Zur Abtastung einer Mustervorlage ist der optische Lesekopf auf einem längsverschiebbaren Schlitten montiert, der auch den Stelltrieb trägt. Dabei können die optische Achse und die Verschieberichtung des Schlittens senkrecht zueinander stehen. Bewährt hat sich diese Ausführungsform bei rotierenden Mustervorlagen, die auf der Oberfläche einer Trommel vorhanden bzw. befestigt worden sind. Werden Mustervorlage und Trommel gedreht, und wird gleichzeitig der Schlitten in Axialrichtung der Trommel bzw. parallel zu deren Oberfläche verschoben, so können auf einer helischen Trommelbahn liegende Vorlagenpunkte aufeinanderfolgend beleuchtet und abgetastet werden.

Als Stelltrieb kann z.B. ein Elektromotor zum Antrieb einer Spindel vorhanden sein, auf der ein mit dem Verschiebeelement gekoppelter Spindelblock drehgesichert verschiebbar ist. Dabei kann der Elektromotor mit der Spindel über eine Kupplung verbunden sein. Auf die Spindel läßt sich ein Stellglied aufsetzen, so daß diese von Hand angetrieben werden kann, wenn z.B. Spindel und Elektromotor entkuppelt sind, so daß sich dann der Spindelblock und damit das Verschiebeelement von Hand verstellen lassen.

Die Erfindung wird nachfolgend unter Bezugnahme auf die Zeichnung näher beschrieben. Es zeigen:
- **Fig. 1**: eine Vorrichtung zur optischen Abtastung einer Mustervorlage;
- **fig. 2**: einen optischen Lesekopf der Vorrichtung nach Fig. 1;
- **Fig. 3**: den mit Verstellmitteln verbundenen optischen Lesekopf nach Fig. 2;
- **Fig. 4**: einen senkrecht zur optischen Achse liegenden Schnitt durch den optischen Lesekopf im Bereich des elektromotorischen Stelltriebes; und
- **Fig. 5**: einen senkrecht zur optischen Achse liegenden Schnitt durch den optischen Lesekopf im Bereich einer Halteeinrichtung für das Verschiebeelement.

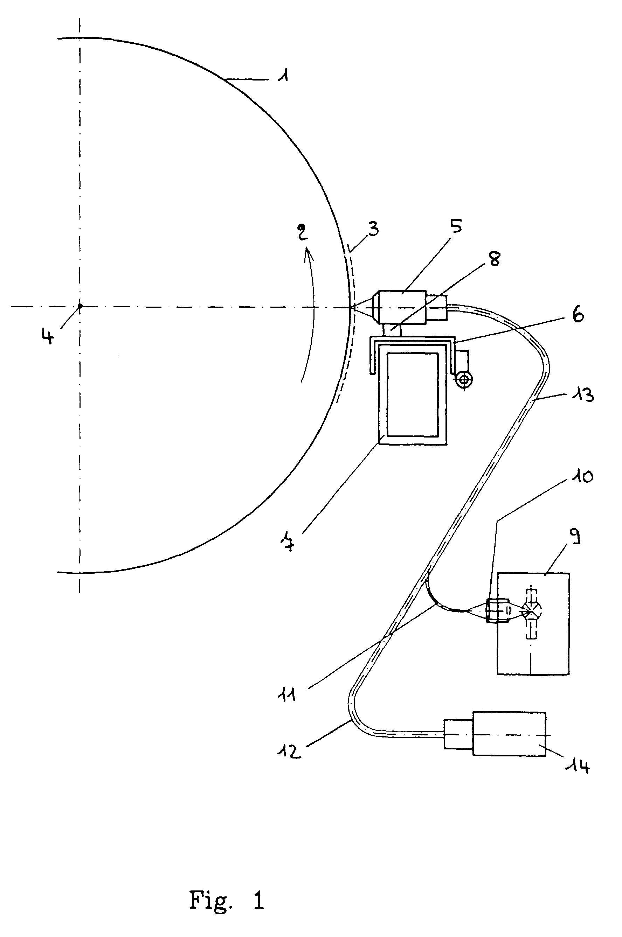

Die Fig. 1 zeigt eine Vorrichtung mit einem optischen Lesekopf zur Abtastung einer Mustervorlage. Die Vorrichtung umfaßt eine Trommel 1, die in Richtung 2 rotiert und auf ihrem Außenmantel eine auszulesende Mustervorlage 3 trägt. Dabei kann die Mustervorlage 3 mit Klebestreifen auf der Trommel 1 befestigt oder durch ein Vakuum gegen den Mantel der Trommel 1 gezogen werden, das im Innern der Trommel 1 erzeugt wird. Um die Mustervorlage 3 anzusaugen. kann die Trommel 1 mit geeigneten Mantelöffnungen versehen sein. Die Trommel 1 selbst rotiert um ihre Längs- bzw. Zylinderachse 4.

Ein optischer Lesekopf 5 sorgt für eine punktförmige Beleuchtung der Trommel- bzw. Vorlagenoberfläche. Dieser optische Lesekopf 5 wird mit einem Schlitten 6 in Richtung der Trommelachse 4 entlang einer schwingungssteifen Führung 7 bewegt. Dabei ist der optische Lesekopf 5 über eine Halteeinrichtung 8 auf dem Schlitten 6 positioniert. Die schwingungssteife Führung 7 ist auf einem nicht dargestellten Maschinenbett abgestützt, auf dem sich auch die Aufnahmelager befinden, die die Trommel 1 stirnseitig halten.

Ein Lampengehäuse 9 ist vorgesehen, um über eine Kondensoroptik 10 ein Ende eines flexiblen Lichtleiters 11 mit einem sehr intensiven Lichtstrom zu beaufschlagen. Der Lichtleiter 11 ist mit weiteren Rücklichtleitern 12, welche das von der Mustervorlage 3 reflektierte Licht aufnehmen, zu einem Lichtleiterstrang 13 zusammengefaßt und führt zum optischen Lesekopf 5. Dort wird das andere Ende des Lichtleiters 11, also sein Lichtaustrittsende durch einige Bauelemente des optischen Lesekopfes 5 auf der Oberfläche der Mustervorlage 3 abgebildet. Es wird dadurch auf dieser Oberfläche ein heller und kreisförmiger Lesefleck erzeugt. Das von der Oberfläche der Mustervorlage 3 reflektierte Licht wird durch andere Teile des optischen Lesekopfes 5 aufgenommen und über die Rücklichtleiter 12 einer Auswerteeinheit 14 zugeführt, deren Aufgabe es ist, die Farbe des zurückgeleiteten Lichtes zu messen und in elektrische Signale umzuwandeln.

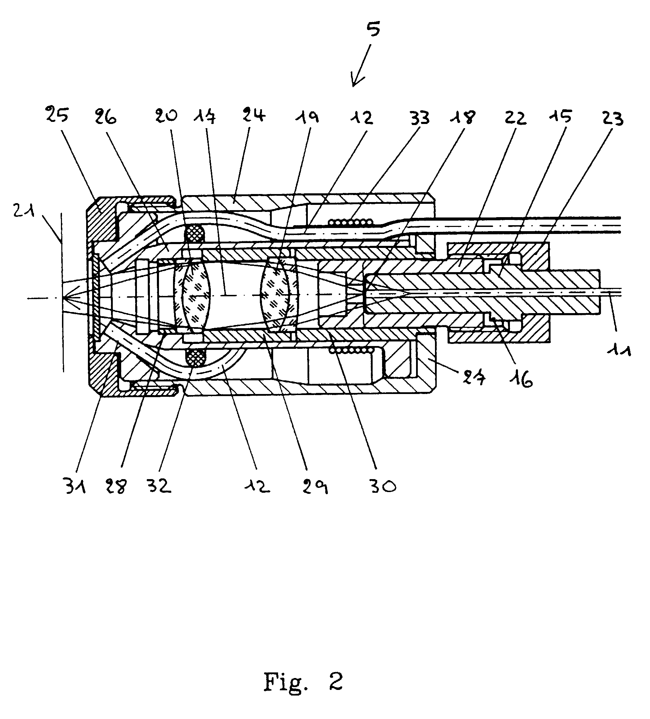

Die Fig. 2 zeigt einen Längsschnitt durch den optischen Lesekopf 5 nach Fig. 1.

Der Lichtleiter 11 ist in seinem Endbereich in einer zylindrischen Fassung 15 gehalten. die im hinteren Bereich mit einem zylindrischen Umfangsflansch 16 versehen ist. Die Zentralachse der zylindrischen Fassung 15 liegt dabei auf der optischen Achse des Lesekopfes 5. Die optische Achse des Lesekopfes 5 trägt hier das Bezugszeichen 17. Das aus dem Lichtaustrittsende 18 des Lichtleiters 11 austretende Lichtbündel wird durch zwei auf der optischen Achse 17 positionierte Achromate 19 und 20 gebündelt und als Bild des Lichtleiterendes 18 auf die Oberfläche 21 der Mustervorlage 3 projiziert.

Die zylindrische Fassung 15 ist in einem Verschiebeelement 22 gelagert, das als Verschiebehülse ausgebildet ist. Dabei wird die Fassung 15 mit Hilfe einer Überwurfmutter 23 gehalten, die den Umfangsflansch 16 hintergreift und vorderseitig auf ein Außengewinde im hinteren Bereich des Verschiebelements 22 aufgeschraubt ist. Durch die Überwurfmutter 23 wird die Fassung 15 in das Verschiebeelement 22 hineingedrückt, so daß der entlang der Zentralachse der Fassung 15 verlaufende Lichtleiter 11 mit seinem Lichtaustrittsende 18 exakt auf der optischen Achse 17 zu liegen kommt.

In einem äußeren Gehäuse 24 wird mit Hilfe einer Klemmutter 25 ein Gehäuseinnenteil 26 festgehalten. Die Klemmutter 25 wird auf den vorderen Stirnseitenbereich des äußeren Gehäuses 24 aufgeschraubt. Sie drückt dabei das Gehäuseinnenteil 26 nach hinten und gegen eine im Inneren des Gehäuseinnenteils 26 liegende Aufeinanderfolge von Bauelementen, die sich ihrerseits an einer Rückwand 27 des äußeren Gehäuses 24 abstützen. Als Bauelemente sind innerhalb des Gehäuseinnenteils 26 in Richtung von der vorderen Stirnseite des optischen Lesekopfes 5 nach hinten gesehen ein Einstellring 28, ein erster Hohlzylinder 29 und ein zweiter Hohlzylinder 30 vorhanden. Sowohl die Hohlzylinder 29 und 30 als auch der Einstellring 28 liegen koaxial zur optischen Achse 17. Dabei ist zwischen dem ersten Hohlzylinder 29 und dem zweiten Hohlzylinder 30 der erste Achromat 19 eingeklemmt, während der zweite Achromat 20 zwischen dem Einstellring 28 und dem ersten Hohlzylinder 29 eingeklemmt ist. Der zweite Hohlzylinder 30 dient ferner als Verschiebekanal für das Verschiebeelement 22. Hier ist das Verschiebeelement 22 passend im zweiten Hohlzylinder 30 geführt.

In Bohrungen 31 des Gehäuseinnenteils 26 sind die Rücklichtleiter 12 eingeklebt. Die vorderseitigen Enden der Rücklichtleiter 12 sind dabei durch die Bohrungen so geführt. daß sie unter einem spitzen Winkel auf die optische Achse 17 zulaufen. Dabei schneiden sich die Flächennormalen der Stirnflächen dieser Lichtleitfasern 12 in einem gemeinsamen und auf der optischen Achse 17 liegenden Punkt. Die Rücklichtleiter 12 werden im hinteren Bereich des optischen Lesekopfes 5 aus dem Gehäuse 24 herausgeführt und zunächst in der Nähe ihrer vorderen Enden durch einen Gummi-O-Ring 32 möglichst sanft umgelenkt. Sie verlaufen danach etwa parallel zur optischen Achse 17 nach hinten und werden nach Verlassen des Gehäuses 24 mit dem Lichtleiter 11 zu dem genannten Lichtleiterstrang 13 zusammgefaßt. Noch innerhalb des Gehäuses 24 werden die Rücklichtleiter 12 durch Drahtwindungen 33 in ihrer Lage fixiert, so daß die Klebungen innerhalb der Bohrungen 31 praktisch nicht mehr belastet werden, wenn Zugkräfte auf den Lichtleiterstrang 13 einwirken. Zum Einkleben der Rücklichtleiter 12 in die Bohrungen 31 wird ein Kleber verwendet, der eine sehr geringe Brechzahl aufweist, damit die Totalreflektion an diesen Stellen weitgehend erhalten bleibt.

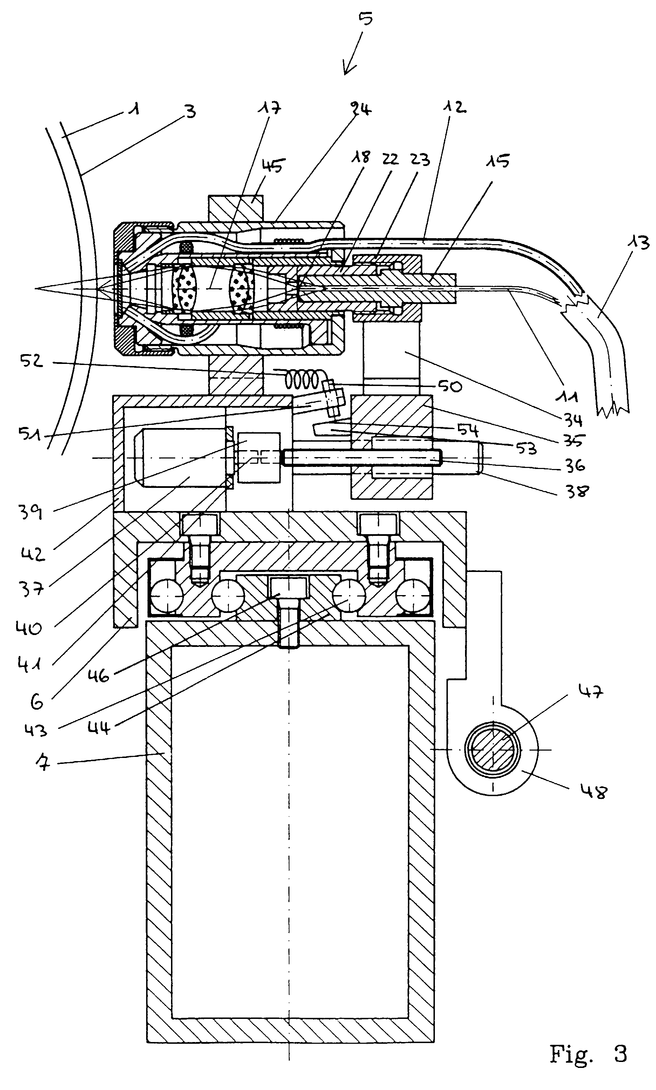

Die Fig. 3 zeigt einen die optische Achse 17 aufnehmenden Schnitt senkrecht zur Zylinderachse 4.

Das Verschiebeelement 22 ist gemeinsam mit der Fassung 15 und der Überwurfmutter 23 durch einen Halter 34 auf einem Querschlitten 35 montiert und kann von diesem Querschlitten 35 Stellbewegungen entlang der optischen Achse 17 übernehmen. Eine axiale Verschiebung des Querschlittens 35 durch eine Spindel 36 und einen Miniaturstellmotor 37 wird auf diese Weise dem Lichtleiteraustrittsende 18 aufgeprägt. Wird dieses Lichtleiteraustrittsende näher zu dem rechten Achromaten 19 gebracht, dann rückt das Bild des Lichtleiteraustrittsendes 18 vom linken Achromaten 20 weiter ab und wird außerdem größer. Der Querschnitt, in welchem der Lichtkegel von der Oberfläche der Trommel 1 geschnitten wird, wächst auf diese Weise nicht nur infolge der Bildvergrößerung sondern auch aufgrund des Abrückens der Bildlage in das Innere der Trommel und wächst schon bei kleinen Lageveränderungen des Lichtleiteraustrittsendes 18 kräftig an. Für eine einwandfreie Führung des Querschlittens 35 sorgen geschliffene Rundführungen 38. Die Spindel 36 ist mittels einer Kupplung 39 drehsteif mit einer Antriebswelle 40 des Stellmotors 37 verbunden. Der Stellmotor 37 ist mittels einer Befestigungsplatte 41 an einem Motorgehäuse 42 gehalten. Das Motorgehäuse 42 sitzt fest auf dem Schlitten 6. der seinerseits durch Kugelumlaufführungen 43 entlang einer Führungsschiene 44 genau parallel zur Zentralachse 4 der Trommel 1 geleitet ist. Auf dem Motorgehäuse 42 stützt sich ferner über eine Halterung 45 der optische Lesekopf 5 ab. Die Führungsschiene 44 ist mit einem biege- und torsionssteifen Kastenträger über Schrauben 46 verschraubt, wobei der Kastenträger die eingangs bereits erwähnte schwingungssteife Führung 7 bildet. Eine Längsspindel 47, die durch einen nicht mehr dargestellten Schrittmotor angetrieben wird, sorgt für die laufende Bewegung des gesamten Aufbaus während des Lesevorgangs, also für den Antrieb des Schlittens 6. Diese Bewegung wird von einem Mutterngehäuse 48 von der Spindel abgegriffen und auf den Längsschlitten 6 übertragen.

Natürlich kann statt der motorischen Verstellung des Querschlittens 35 durch den Stellmotor 37 auch eine einfachere manuelle Verstellung vorgesehen sein. Es wird dann die Spindel 36 vom Stellmotor 37 entkoppelt und ein nicht dargestelltes Handrad auf ihr freies Ende montiert.

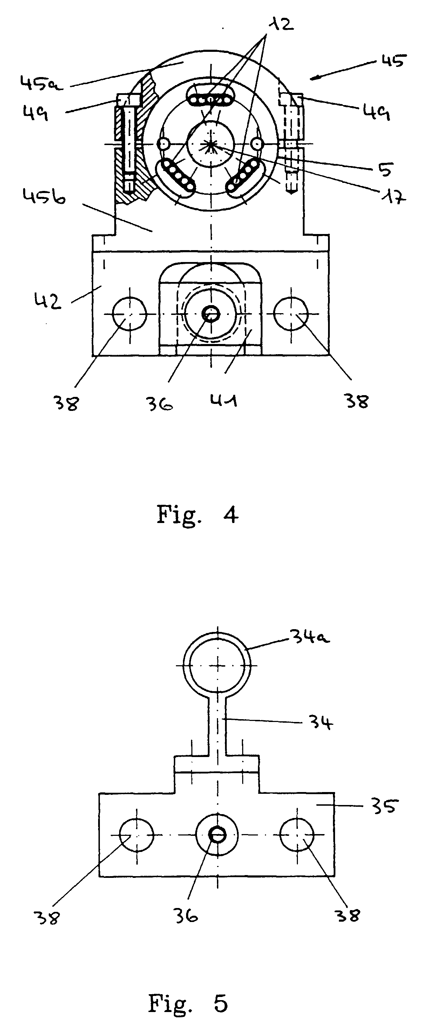

Die Fig. 4 zeigt eine Ansicht der Rückseite des optischen Lesekopfes 5, der von der Halterung 45 getragen wird. Diese Halterung 45 ruht auf dem Motorgehäuse 42 und besteht aus einem unteren Teil 45b sowie aus einem oberen Teil 45a. Beide Teile 45a und 45b weisen zueinander passende halbkreisförmige Ausnehmungen zur Aufnahme des zylindrischen Lesekopfes 5 auf und werden mit Hilfe von Schrauben 49 gegeneinanderbewegt, um den Lesekopf 5 zwischen sich einzupressen. Wie zu erkennen ist, laufen die geschliffenen Rundführungen 38 parallel zur optischen Achse 17 des Lesekopfes 5. Entsprechendes gilt für die Spindel 36. Die geschliffenen Rundführungen 38 stützen sich ebenfalls am Motorgehäuse 42 ab und nehmen die Spindel 36 zwischen sich auf.

Auf den nach hinten weisenden Verlängerungen der geschliffenen Rundführungen 38 sitzt der in Fig. 5 dargestellte Querschlitten 35, der mit entsprechenden Durchgangsbohrungen zur Aufnahme der Rundführungen 38 ausgestattet ist. Die Spindel 36 ist in ein entsprechendes Durchgangsinnengewinde im Querschlitten 35 hindurchgeschraubt. Der Querschlitten 35 trägt an seiner oberen Fläche fest mit ihm verbunden den Halter 34. der oben eine kreisförmige Aufnahme 34a für die Überwurfmutter 23 aufweist. Sie kann passend in die kreisförmige Aufnahme 34a eingesetzt sein und in dieser festsitzen. Wird der Querschlitten durch Verstellung der Spindel 36 entlang der Rundführungen 38 bewegt, so wird über den Halter 34 und dessen Aufnahme 34a das Verschiebeelement 22 entsprechend mitgenommen, so daß auf diese Weise das Lichtleiteraustrittsende 18 verschoben wird.

Die Figur 3 läßt noch einen Näherungssensor 50 erkennen. Dieser Näherungssensor 50 kann z. B. ein induktiv arbeitender Sensor sein. Der Näherungssensor 50 ist über einen starren Bügel 51 fest mit dem Motorgehäuse 42 verbunden und ferner über eine elektrische Leitung 52 mit einer nicht dargestellten Auswerteelektronik. Unterhalb des Näherungssensors 50 befindet sich ein Abtasttisch 53, der fest mit dem Querschlitten 35 verbunden ist. Der Abtasttisch 53 weist eine Oberfläche 54 auf, die schräg zur Längsrichtung der Spindel 36 bzw. schräg zur optischen Achse 17 verläuft. Sie senkt sich in Richtung zur Trommel 1 gesehen ab. Wird der Querschlitten 35 entlang der geschliffenen Rundführungen 38 bewegt. so verändert sich damit auch der Abstand zwischen dem Näherungssensor 50 und der Oberfläche 54 des Abtasttisches 53. Jedem so erhaltenen Abstand zwischen dem Näherungssensor 50 und der Oberfläche 54 des Abtasttisches 53 ist eine entsprechende Größe des Lichtkegeldurchmessers des optischen Lesekopfs 5 auf der Oberfläche der Trommel 1 bzw. Mustervorlage 3 zugeordnet. Durch Eichung der genannten Abstände können somit für die jeweiligen Abstände Lichtfleckgrößen vorgegeben bzw. vorgespeichert werden. Diese Lichtfleckgrößen können dann durch Einstellung eines gewünschten Abstands zwischen dem Näherungssensor 50 und der Oberfläche 54 des Abtasttisches 53 ausgewählt werden. Dies ist möglich, da der Durchmesser der Trommel 1 bzw. die Dicke der Mustervorlage 3 für alle Abtastvorgänge konstant ist. Sollten andere Trommeldurchmesser oder Mustervorlagendicken verwendet werden, so kann eine entsprechende Abstandsnachregelung erfolgen.

## Patentansprüche

1. Optische Leseeinrichtung (5) mit einer eine optische Achse (17) aufweisenden Abbildungsoptik (19,20), die von einer Lichtquelle (18) ausgesandtes Licht bündelt, sowie mit einer konzentrisch zur optischen Achse (17) angeordneten Lichtempfangsoptik (12) zum Empfang des von der Abbildungsoptik (19, 20) gebündelten und von einem Gegenstand zurückgeworfenen Lichts, **dadurch gekennzeichnet**, daß die Lichtquelle (18) entlang der optischen Achse (17) relativ zur Abbildungsoptik (19, 20) verschiebbar ist.

2. Optische Leseeinrichtung nach Anspruch 1, **dadurch gekennzeichnet**, daß die Abbildungsoptik (19, 20) Achromate enthält.

3. Optische Leseeinrichtung nach Anspruch 1 oder 2, **dadurch gekennzeichnet**, daß die Lichtquelle (18) in einem Verschiebeelement (22) angeordnet ist, welches passend in einem Verschiebekanal (30) verschiebbar ist.

4. Optische Leseeinrichtung nach Anspruch 3, **dadurch gekennzeichnet**, daß der Verschiebekanal (30) in einem die Abbildungsoptik (19, 20) aufnehmenden Gehäuseteil (26) angeordnet ist.

5. Optische Leseeinrichtung nach Anspruch 1, **dadurch gekennzeichnet**, daß das Verschiebeelement (22) und der Verschiebekanal (30) zylindrisch ausgebildet sind.

6. Optische Leseeinrichtung nach Anspruch 3, 4 oder 5, **dadurch gekennzeichnet**, daß als Stelltrieb ein Elektromotor (37) zum Antrieb einer Spindel (36) vorhanden ist, auf der ein mit dem Verschiebeelement (22) gekoppelter Querschlitten (35) drehgesichert verschiebbar ist.

7. Optische Leseeinrichtung nach Anspruch 5 und 6, **dadurch gekennzeichnet**, daß die Fassung (15) einen Umfangsflansch (16) aufweist und mittels einer diesen hintergreifenden Überwurfmutter (23) fixiert ist, die auf das Verschiebeelement (22) aufgeschraubt ist.

8. Optische Leseeinrichtung nach einem der Ansprüche 3 bis 7, **dadurch gekennzeichnet**, daß das Verschiebeelement (22) mit einem Stelltrieb (36, 37) gekoppelt ist.

9. Optische Leseeinrichtung nach Anspruch 8, **dadurch gekennzeichnet**, daß der Stelltrieb ein elektromotorischer bzw. handbetätigbarer Stelltrieb ist.

10. Optische Leseeinrichtung nach Anspruch 8 oder 9, **dadurch gekennzeichnet**, daß sie auf einem längsverschiebbaren Schlitten (6) montiert ist, der auch den Stelltrieb (36, 37) trägt.

11. Optische Leseeinrichtung nach Anspruch 9 oder 10, **dadurch gekennzeichnet**, daß als Stelltrieb ein Elektromotor (37) zum Antrieb einer Spindel (36) vorhanden ist, auf der ein mit dem Verschiebeelement (22) gekoppelter Querschlitten (35) drehgesichert verschiebbar ist.

12. Optische Leseeinrichtung nach Anspruch 11, **dadurch gekennzeichnet**, daß der Elektromotor (37) mit der Spindel (36) über eine Kupplung (39) verbunden ist.

13. Optische Leseeinrichtung nach Anspruch 11 oder 12, **dadurch gekennzeichnet**, daß auf die Spindel (36) ein handbetätigbares Stellglied aufsetzbar ist.

14. Optische Leseeinrichtung nach Anspruch 10 oder einem der folgenden, **dadurch gekennzeichnet**, daß die optische Achse (17) und die Verschieberichtung des Längsschlittens (6) senkrecht zueinander stehen.

## Claims

1. Optical reading device (5) having projection optics (19, 20) which have an optical axis (17) and focus light emitted by a light source (18), and having light receiving optics (12), arranged concentrically to the optical axis (17), for the reception of light focused by the projection optics (19, 20) and reflected back from an object, characterized in that the light source (18) can be displaced along the optical axis (17), relative to the projection optics (19, 20).

2. Optical reading device according to Claim 1, characterized in that the projection optics (19, 20) contain achromats.

3. Optical reading device according to Claim 1 or 2, characterized in that the light source (18) is arranged in a displacer (22), which can be displaced with a snug fit in a displacement channel (30).

4. Optical reading device according to Claim 3, characterized in that the displacement channel (30) is arranged in a housing part (26) receiving the projection optics (19, 20).

5. Optical reading device according to Claim 1, characterized in that the displacer (22) and the displacement channel (30) are of cylindrical construction.

6. Optical reading device according to Claim 3, 4 or 5, characterized in that an electric motor (37) for driving a spindle (36), on which a cross-slide (35) which is coupled to the displacer (22) can be displaced in a rotationally fixed manner, is present as actuator drive.

7. Optical reading device according to Claims 5 and 6, characterized in that the mount (15) has a peripheral flange (16) and is fixed by means of a union nut (23) which engages behind the latter and is screwed onto the displacer (22).

8. Optical reading device according to one of Claims 3 to 7, characterized in that the displacer (22) is coupled to an actuator drive (36, 37).

9. Optical reading device according to Claim 8, characterized in that the actuator drive is an actuator drive which can be operated by an electric motor or manually.

10. Optical reading device according to Claim 8 or 9, characterized in that it is mounted on a longitudinally displaceable slide (6), which also carries the actuator drive (36, 37).

11. Optical reading device according to Claim 9 or 10, characterized in that an electric motor (37) for driving a spindle (36), on which a cross-slide (35) which is coupled to the displacer (22) can be displaced in a rotationally fixed manner, is present as actuator drive.

12. Optical reading device according to Claim 11, characterized in that the electric motor (37) is connected to the spindle (36) via a coupling (39).

13. Optical reading device according to Claim 11 or 12, characterized in that an actuator which can be operated manually can be fixed onto the spindle (36).

14. Optical reading device according to Claim 10 or one of the following, characterized in that the optical axis (17) and the displacement direction of the longitudinal slide (6) are perpendicular to each other.

## Revendications

1. Lecteur optique (5) doté d'une optique de représentation (19, 20) présentant un axe optique (17), optique focalisant de la lumière émise par une source lumineuse (18), ainsi qu'avec une optique de réception de lumière (12) disposée concentriquement par rapport à l'axe optique (17), pour recevoir la lumière focalisée par l'optique de représentation (19, 20) et retournée par un objet, caractérisé en ce que la source lumineuse (18) est déplaçable le long de l'axe optique (17) par rapport à l'optique de représentation (19, 20).

2. Lecteur optique selon la revendication 1, caractérisé en ce que l'optique de représentation (19, 20) contient des éléments achromatiques.

3. Lecteur optique selon la revendication 1 ou 2, caractérisé en ce que la source lumineuse (18) est disposée dans un élément déplaçable (22), déplaçable avec ajustement dans un canal de déplacement (30).

4. Lecteur optique selon la revendication 3, caractérisé en ce que le canal de déplacement (30) est disposé dans une partie de boîtier (26) recevant l'optique de représentation (19, 20).

5. Lecteur optique selon la revendication 1, caractérisé en ce que l'élément déplaçable (22) et le canal de déplacement (30) sont cylindriques.

6. Lecteur optique selon la revendication 3, 4 ou 5, caractérisé en ce qu'est prévu comme mécanisme de réglage un moteur électrique (37) destiné à entraîner une broche (36) sur laquelle est déplaçable, assujetti en rotation un chariot transversal (35) couplé à l'élément déplaçable (22).

7. Lecteur optique selon les revendications 5 et 6, caractérisé en ce que la monture (15) présente une bride périphérique (16) et est fixée au moyen d'un écrou raccord (23) saisissant celle-ci par l'arrière et vissée sur l'élément déplaçable (22).

8. Lecteur optique selon l'une des revendications 3 à 7, caractérisé en ce que l'élément déplaçable (22) est couplé à un mécanisme de réglage (36, 37).

9. Lecteur optique selon la revendication 8, caractérisé en ce que le mécanisme de réglage est un mécanisme de réglage actionnable par moteur électrique ou manuellement.

10. Lecteur optique selon la revendication 8 ou 9, caractérisé en ce qu'il est monté sur un chariot (6) déplaçable longitudinalement, portant également le mécanisme de réglage (36, 37).

11. Lecteur optique selon la revendication 9 ou 10, caractérisé en ce qu'est prévu comme mécanisme de réglage un moteur électrique (37) destiné à l'entraînement d'une broche (36), sur laquelle un chariot transversal (35) couplé à l'élément déplaçable (22) est déplaçable, assujetti en rotation.

12. Lecteur optique selon la revendication 11, caractérisé en ce que le moteur électrique (37) est relié à la broche (36) par un accouplement (39).

13. Lecteur optique selon la revendication 11 ou 12, caractérisé en ce qu'un organe de réglage actionnable manuellement est applicable sur la broche (36).

14. Lecteur optique selon la revendication 10 ou l'une des revendications suivantes, caractérisé en ce que l'axe optique (17) et le dispositif déplaçable du chariot longitudinal (6) sont placés perpendiculairement l'un à l'autre.
